# EUROPÄISCHE PATENTSCHRIFT

(11) **EP 0 960 585 B1**
(45) Veröffentlichungstag und Bekanntmachung des Hinweises auf die Patenterteilung: **11.02.2004**
(21) Anmeldenummer: 99810459.0
(22) Anmeldetag: 27.05.1999
(51) Int. Cl.: A47B 47/05, A47B 97/00, A47B 87/00, A47F 5/10, F16B 5/06

(54) **Bausatz zur Erstellung von Raumstrukturen**
Set for the construction of tridimensional structures
Ensemble pour la construction de structures tridimensionelles

(30) Priorität: 28.05.1998 CH 117298
(43) Veröffentlichungstag der Anmeldung: 01.12.1999
(73) Patentinhaber: Jugendstätte Bellevue, 9450 Altstätten (CH)
(72) Erfinder: Bärlocher, Richard, 5210 Windisch (CH)
(74) Vertreter: Patentanwälte Feldmann & Partner AG

(56) Entgegenhaltungen:
- DE-A- 3 109 187
- GB-A- 2 232 426
- US-A- 3 836 218
- US-A- 4 524 494
- US-A- 4 903 451

## Beschreibung

Die vorliegende Erfindung betrifft einen Bausatz mit kubischen Trägerelementen und Verbindungsmitteln zur Bildung von Raumstrukturen gemass Oberbegriff des Patentanspruches 1.

Sowohl zur Gestaltung von Messeständen als auch zur Gestaltung von Verkaufsständen in Verkaufsläden sowie zur Bildung von Ausstellungsmobiliar sind Bausätze, die eine modulare und möglichst einfache Bauweise mit hohen Freiheitsgraden erlauben, äusserst beliebt. Vielfach bestehen solche Bausätze aus reinen stabförmigen Elementen, die sich zu Gitterkonstruktionen mittels entsprechender Knotenelemente verbinden lassen. Diese offenen Gitterkonstruktionen lassen sich dann mit beliebigen paneelartigen Elementen kombinieren. Solche Konstruktionen sind zwar im Messebereich äusserst sinnvoll, haben jedoch für eher permanente Verwendungszwecke den Nachteil, dass sie optisch den Eindruck von Provisorien hervorrufen. Zudem lassen sich in solchen Gebilden viele funktionale Elemente nicht unterbringen sondern höchstens anklemmen. Dies ist aus sicherheitstechnischen Gründen meist unerwünscht. In solchen Strukturen lassen sich meist auch wenig Stauräumlichkeiten integrieren und insbesondere kaum Staumöglichkeiten, die sich mit einer gewissen Sicherheit verschliessen lassen.
Sehr viel einfacher in der Konstruktion sind Bausätze, die aus kubischen Trägerelementen und Verbindungsmitteln bestehen, mit denen sich entsprechende Raumstrukturen bilden lassen. Solche bekannten Bausätze gemäss der US-A-3^{.}836^{.}218 sind so konzipiert, dass die Kuben entsprechend gestapelt werden und gegeneinander mittels einschiebbaren Profile flächig aufeinander liegend formschlüssig verbunden werden. Solche den nächstliegenden Stand der Technik bildende Bausätze führen zu sehr stabilen Raumgebilden, die aber einen äusserst schwerfälligen Eindruck erzeugen. Auch in Bezug auf die Verwendung sind bei solchen Systemen Grenzen gesetzt. Insbesondere dienen bei solchen Systemen die Seitenflächen der kubischen Trägerelemente gleichzeitig als Displayflächen. Entsprechend müssen bei einer neuen Verwendung die Kuben neu gestrichen oder bezogen werden. Dies aber verlangt die völlige Demontage der aufgebauten Strukturen.

Die vorliegende Erfindung geht von der bekannten Verwendung von Bausätzen aus, die kubische Trägerelemente aufweisen und mit Hilfe von Verbindungsmitteln zu verschiedenen Raumstrukturen zusammenfügbar sind. Dabei sollen aber die vorgenannten Nachteile behoben werden. Insbesondere soll ein Bausatz geschaffen werden, bei dem die Trägerelemente äusserst schnell und einfach zusammenfügbar sind, die zum Display dienenden Seitenflächen leicht auswechselbar und eine optisch leichte und klar strukturierte Baugestaltung möglich ist.

Diese vielseitige Aufgabe löst ein Bausatz mit den Merkmalen des Patentanspruchs 1.
Aus fertigungstechnischen Gründen und um den Zusammenbau vor Ort möglichst zu vereinfachen, ist es von Vorteil, wenn alle Kuben eines Bausatzes dieselbe Grundfläche aufweisen. Unter dieser Bedingung lassen sich die Höhen der verschiedenen Kuben unterschiedlich gestalten.

Damit die Kuben auch als Stauraum verwendbar sind, sollten sie mindestens einseitig offen sein. Zur Durchführung von Kabeln, Kabelbäumen oder Leitungen ist es von Vorteil, die Grundflächen der Kuben jeweils mit mindestens einer Oeffnung zur Durchführung zu versehen. Hierbei ist es sinnvoll, die Oeffnung in der oberen und unteren Grundfläche deckungsgleich übereinander anzuordnen. Für die Verbindung der Kuben miteinander beziehungsweise der Kuben mit den vorgehängten Paneelen ist es von Vorteil, die Verbindungsmittelaufnahmen als Langlöcher zu gestalten. Dies ist vorteilhaft in der Fertigung und selbsterklärend beim Zusammenbau. Für die Verbindung von Kubus zu Kubus verwendet man vorzugsweise Verbindungsmittel mit den Merkmalen gemäss Patentanspruch 7. Weitere Vorteile des erfindungsgemässen Bausatzes gehen aus den weiteren abhängigen Patentansprüchen hervor und deren Bedeutung und Funktion ist in der nachfolgenden Beschreibung erläutert.

In der Zeichnung ist ein bevorzugtes Ausführungsbeispiel des Erfindungsgegenstandes vereinfacht dargestellt. Es zeigt:
- Figur 1: ein kubisches Trägerelement in perspektivischer Darstellung;
- Figur 2: ein Verbindungsmittel zur Verbindung zweier kubischer Trägerelemente in der Seitenansicht und
- Figur 3: in einer um 90° gedrehten Anordnung.
- Figur 4: zeigt ein etwas anderes Verbindungsmittel, das mit nur einseitiger Halterung versehen ist.
- Figur 5: zeigt ein Paneel mit den daran angeordneten Verbindungsmitteln in der Gesamtansicht, während
- Figur 6: einen Eckbereich eines Paneels zeigt, an dem ein Verbindungsmittel lösbar gehalten ist, während
- Figur 7: einen Paneelabschnitt zeigt, bei dem das Verbindungsmittel ohne Distanzstück direkt am Paneel angebracht ist.
- Figur 8: zeigt einen aus verschiedenen Kuben zusammengesetzten Turm mit funktional unterschiedlichen Kanälen, während
- Figur 9: einen Turm zeigt in perspektivischer Darstellung mit Kuben mit gleicher Paneelausstattung.

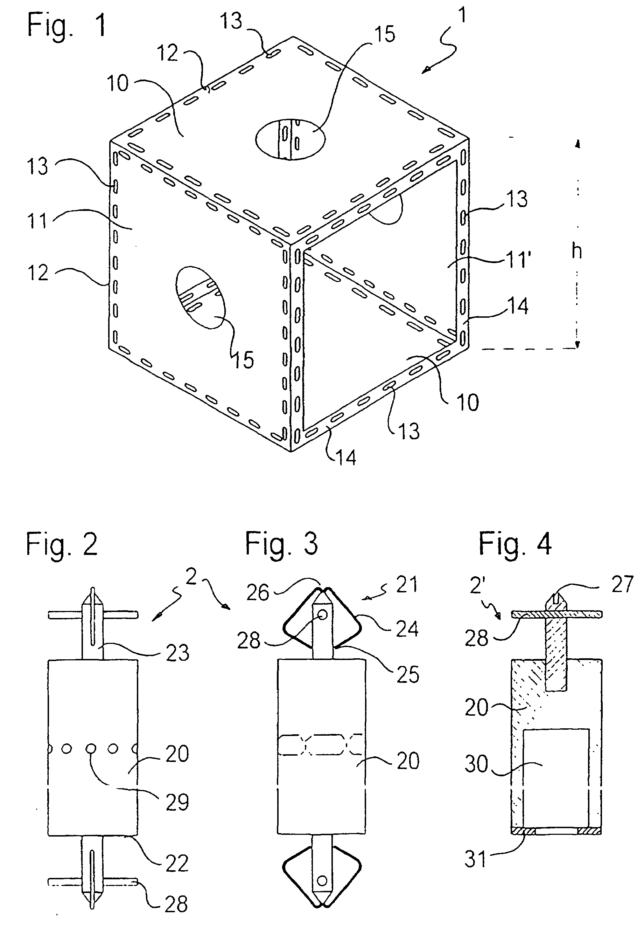

In der nun folgenden Beschreibung werden vorerst die Einzelelemente des Bausatzes wie in den Figuren 1-7 dargestellt beschrieben und danach deren Zusammenwirken. Das eigentliche Grundelement des erfindungsgemässen Bausatzes bildet das kubische Trägerelement 1, wie es in Figur 1 dargestellt ist. Im dargestellten Beispiel ist das kubische Trägerelement ein Würfel mit quadratischer oberer und unterer Grundfläche 10 und ebensolchen quadratischen Seitenflächen 11. Entlang den Seitenkanten 12 aller Seitenflächen 11 und der beiden Grundflächen 10 sind in einem gewissen Raster Verbindungsmittelaufnahmen 13 angeordnet. Die Verbindungsmittelaufnahmen 13 sind in der einfachsten Form als Langlöcher gestaltet. Die kubischen Trägerelemente 1 sind zur freien Kombination allesamt mit derselben Grundfläche 10 als Grundeinheit ausgestaltet. Die Höhe h des kubischen Trägerelementes 1 kann jedoch beliebig variiert werden. Die Grundfläche 10 selber kann aber auch Seitenkanten mit einem ganzzahligen Vielfach der Grundgrösse aufweisen. Mit anderen Worten, statt eines Würfels kann ein Quader geformt sein, der die Grösse von zwei oder drei aneinandergefügten Würfeln aufweist. Weitere Kombinationen sind selbstverständlich machbar. Jeweils eine Seitenfläche 11' wird vorteilhaft offen gestaltet. Um trotzdem die volle Kombinationsfähigkeit zu erhalten, verbleibt auch an der offenen Seitenfläche 11' ein umlaufender Rand 14, der ebenso mit Verbindungsmittelaufnahmen 13 versehen ist. Zumindest die obere und untere Grundfläche 10 ist mit mindestens einer Oeffnung 15 zur Durchführung von Kabeln, Kabelbäumen oder Leitungen versehen. Aus diesem Grund ist selbstverständlich die deckungsgleiche Anordnung der Durchführungsöffnungen 15 in der oberen und unteren Grundfläche 10 sinnvoll. Auch die Seitenflächen 11 können mit Durchführungsöffnungen 15 versehen sein. Insbesondere wenn das kubische Trägerelement die Form eines Würfels hat, ist dessen Einbaulage praktisch beliebig.

Das Trägerelement 1 lässt sich prinzipiell aus veschiedensten Materialien fertigen. Insbesondere aus Metallblech ist eine rationelle Fertigung möglich. Nicht auszuschliessen ist aber auch eine Fertigung aus Holz oder Kunststoff. Neben der hier dargestellten Variante mit nur einer offenen Seitenfläche 11' sind selbstverständlich auch Ausführungsformen mit mehreren offenen Seitenflächen 11' denkbar. Prinzipiell lässt sich so der Würfel praktisch auf ein Gerippe aus Winkelprofilen reduzieren, so dass nur noch Ränder 14 mit den Verbindungsmittelaufnahmen 13 verbleiben. Dies kann dann von Interesse sein, wenn sehr grosse Raumstrukturen geschaffen werden sollen und das Eigengewicht reduziert werden muss. Das in der Figur 1 dargestellte kubische Trägerelement 1 mit lediglich einer offenen Seitenfläche 11' entspricht jedoch der bevorzugten Variante.

Mehrere kubische Trägerelemente 1 lassen sich mit Verbindungsmitteln 2 zu räumlichen Gebilden zusammenfügen. Das Verbindungsmittel 2 besteht aus einem Distanzstück 20 und Mittel 21 zur kraft- und formschlüssigen Halterung. Das Distanzstück 20 ist im dargestellten Beispiel ein zylindrisches Element, beispielsweise gefertigt aus einem runden Stab. Selbstverständlich kann das Distanzstück 20 auch andere Querschnittsformen aufweisen. Aus den Stirnflächen 22 ragt senkrecht ein Steckbolzen 23. Am Steckbolzen 23 sind zwei einander diametral gegenüberliegende, vom Bolzen 23 abstehende Federn 24 angeordnet. Diese Federn 24 dienen der kraftschlüssigen Halterung des Verbindungsmittels 2 mit einem Trägerelement 1. Die aus Federstahl gefertigten Drahtbügel, die die Federn 24 formen, sind bei 25 fest am Bolzen 23 angebracht, während sie oben in einer zentrischen Oeffnung 27 beweglich gehalten sind. Führt man die Mittel 21 des Verbindungsteiles 2 in die Verbindungsmittelaufnahmen 13 am kubischen Trägerelement 1 ein, so werden die Federn 24 zum Bolzen 23 hin zusammengedrückt, wobei sich gleichzeitig die Enden 26 ein Stück weit nach oben aus der Oeffnung 27 hinausbewegen.

Den formschlüssigen Anteil der Verbindung bildet ein Stift 28, welcher den Steckbolzen 23 senkrecht diametral durchsetzt. Dieser Stift 28 erlaubt die Einführung des Verbindungsmittels 2 in die Verbindungsmittelaufnahmen 13 lediglich in einer Position, bei der sich der Stift 28 in der Verlaufsrichtung des Langloches befindet. Wird danach das Verbindungsmittel 2 verdreht, so ist auch eine formschlüssige Verbindung erfolgt. Zur Verdrehung des Verbindungsmittels 2 sind am Distanzstück 20 Mittel 29 vorgesehen, die ein Erfassen und Verdrehen des Verbindungsmittels erleichtern. Dies können beispielsweise. Bohrungen, wie in der Figur 2 dargestellt, sein oder eingepresste oder geschliffene Phasen, wie in Figur 3 gezeigt, die ein Erfassen und Verdrehen des gesamten Verbindungsmittels 2 mit einem Gabelschlüssel erlauben. Andere bekannte Ausführungsvarianten sind selbstverständlich nicht ausgeschlossen.

In der Figur 4 ist ein Verbindungsmittel 2' im Schnitt gezeichnet, das sich gegenüber dem Verbindungsmittel 2 nach den Figuren 2 und 3 insofern unterscheidet, dass das Verbindungsmittel lediglich einseitig als männliches Kupplungsteil ausgestaltet ist mit Steckbolzen 23, Stift 28 und Federn 24, während das gegenüberliegende Ende des. Distanzstückes 20 einen Hohlraum 30 aufweist. Dieser Hohlraum 30 ist mit einem Deckel 31 verschlossen. Der Deckel 31 weist ein Langloch auf, das den Langlöchern der Verbindungsmittelaufnahmen 13 entspricht. Damit lässt sich ein Verbindungsmittel 2 in der Rückseite des Verbindungsmittels 2' einführen. Dies ist dann sinnvoll, wenn beispielsweise die nachfolgend zu beschreibenden Paneele als Verbindungsmittel lediglich aufgeschweisste Steckbolzen 23 mit Federn 24 und einem Stift 28 umfassen, jedoch kein Distanzstück am Paneel selber direkt oder indirekt angebracht ist. In einem solchen Fall kann ein Verbindungsmittel 2' wie in Figur 4 dargestellt am kubischen Trägerelement 1 befestigt werden und ein Paneel mit dem Steckbolzen 23 durch den Deckel 31 form- und kraftschlüssig in den Hohlraum 30 eingeführt werden.

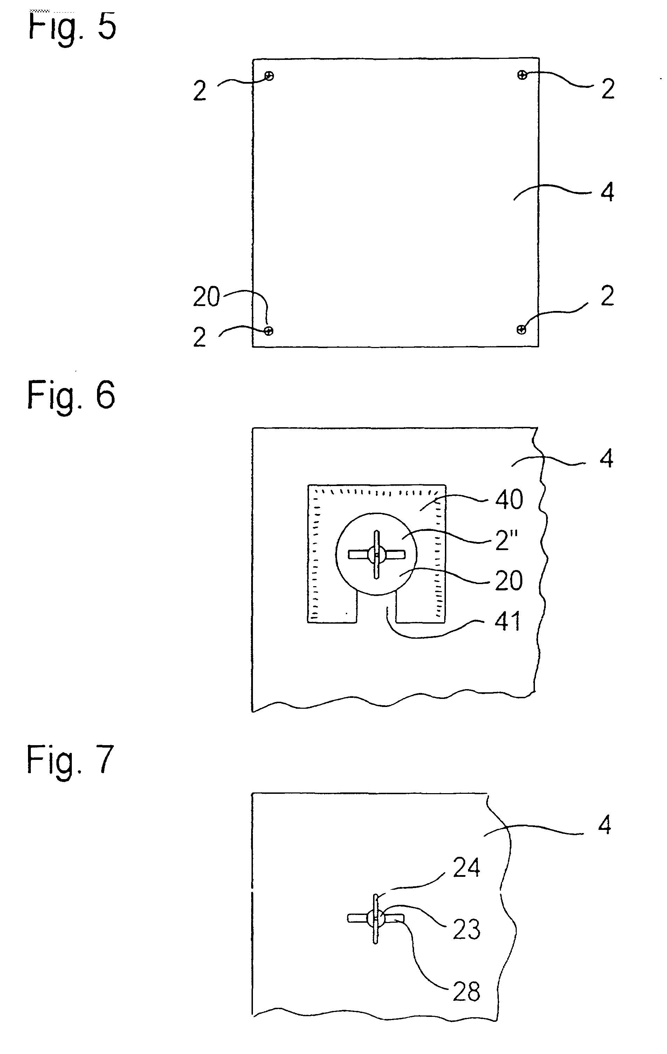

In der Figur 5 ist ein quadratisches Paneel 4 in der Aufsicht dargestellt. Hierbei ist jene Fläche sichtbar, die im montierten Zustand zum Trägerelement 1 hin gerichtet ist. Das Paneel 4 weist mindestens vier Verbindungsmittel 2 auf. Dabei ist es möglich, dass die Verbindungsmittel 2 mit dem Distanzstück 20 am Paneel 4 fest oder lösbar angeordnet sind, oder aber dass das Paneel 4 nur den Steckbolzen 23 mit dem Stift 28 für den Formschluss und die Federn 24 für den Kraftschluss aufweist. In diesem Falle muss ein Verbindungsmittel 2', wie in Figur 4 dargestellt ist, verwendet werden, so dass das Distanzstück 20 bereits vorhanden ist. Die Ausführungen der Figuren 4 und 7 gehören somit zwingend zusammen. Während bei der Ausführung gemäss der Figur 5 die Verbindungsmittel 2 fest mit dem Paneel verbunden sind, zeigt die Figur 6 eine Variante, bei der das Verbindungsmittel 2" lösbar mit dem Paneel 4 verbunden ist. Hierzu weist das Paneel 4 eine aufgeschweisste oder -gelötete Einstecktasche 40 auf mit einem eineiigen Einführungsschlitz 41. Das Distanzstück 20 erfordert dann entsprechend einseitig Einführungskerben, so dass sich das Distanzstück 20 in die Lasche 40 einschieben lässt.

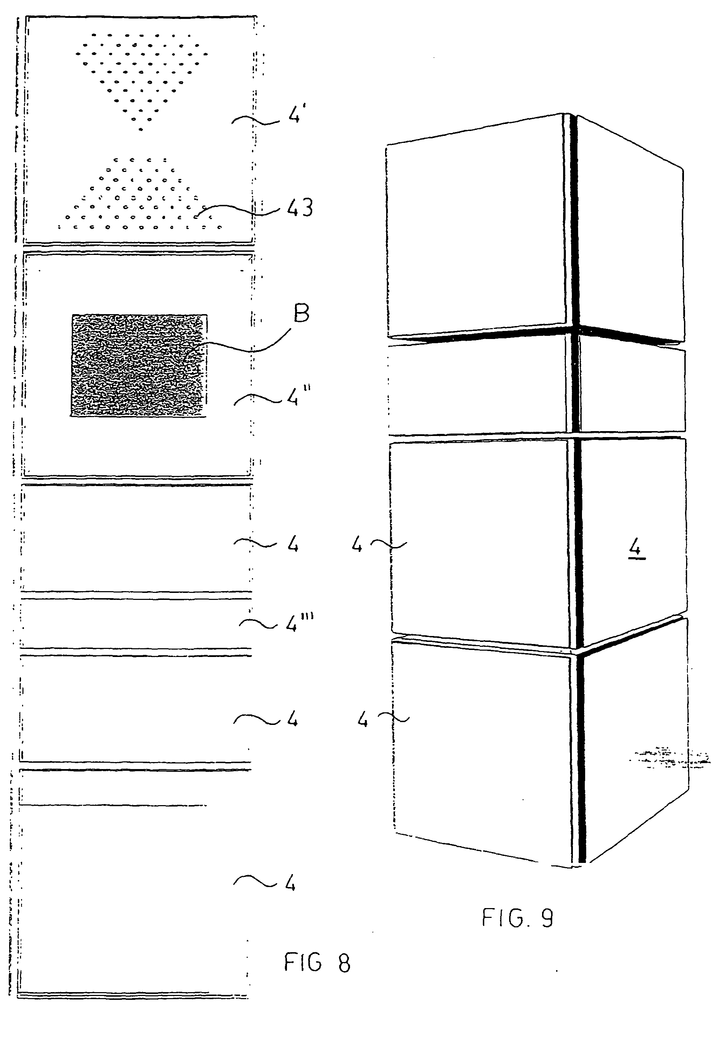

In der Figur 9 ist eine Art Säule oder Turm aus Trägerelementen unterschiedlicher Höhe zusammengesetzt. Die Trägerelemente 1 sind jedoch nicht sichtbar wegen der bereits vorgehängten Paneele 4. Entsprechend ist auch nicht sichtbar, welches der Paneele 4 die offene Seitenfläche 11' abdeckt. Lediglich das Personal weiss dies und kann im Prinzip das entsprechende Paneel einfach abziehen, falls die Verbindungsmittel 2 in der Einstecklage belassen worden sind. Falls dies zu unsicher ist, kann man die Verbindungsmittel selbstverständlich zur Sicherung auch verdrehen. Dabei dürfte es in Prinzip bereits genügen, zwei etwa diagonal gegenüberliegende Verbindungselemente durch Verdrehen zu sichern. Die Paneele 4 dienen in einfachster Form als Displayflächen und können entsprechend beliebig beschriftet oder bebildert sein. In Bezug auf die offene Seitenfläche des Trägerelementes 1 dient jenes Paneel gleichzeitig auch als Verschliesselement. Die Paneele können aber auch andere, funktionale Charakteristiken aufweisen. In der Figur 8 ist eine Anwendung gezeigt, bei der in der aus dem erfindungsgemässen Bausatz erstellten Säule beispielsweise ein Computer mit allen Bauteilen untergebracht ist. Entsprechend ist das oberste Paneel 4' mit einer Perforation 43 versehen zur besseren akustischen Uebertragung, wobei entsprechend in jenem, nicht sichtbaren Trägerelement mindestens eine Lautsprecherboxe untergebracht ist. Ueber die offene Seitenfläche des Trägerelementes ist das perforierte Paneel 4' angeordnet. Im direkt darunter befindlichen ebenfalls nicht sichtbaren Trägerelement ist beispielsweise ein Monitor untergebracht. Das Paneel 4" beschränkt sich so im wesentlichen auf eine Blende, um den Bildschirm B. Der eigentliche Steuerkasten des Computers kann in einem direkt darunter befindlichen Trägerelement mit geringerer Bauhöhe untergebracht sein. In diesem Falle ist eine vollkommen flache Paneelscheibe 4 vorhanden. Unter jenem Trägerelement befindet sich ein weiteres Trägerelement mit nochmals geringerer Bauhöhe, in dem beispielsweise auf einem Vollauszug die Tastatur des Computers untergebracht sein kann. Das Paneel 4''' ist dann allerdings in Abweichung zu den sonst üblichen Varianten entweder schwenkbar am Trägerelement befestigt oder aber direkt am Vollauszug angemacht. Die weiter unten befindlichen Trägerelemente haben wiederum einfache Paneele 4, die mit oder ohne Dekoration ausgestaltet sein können. Die Trägerelemente lassen sich hier als Stauraum für andere Objekte, die beispielsweise an einer Ausstellung benötigt werden, wie Prospekte oder Verpackungsmaterial, benutzen.

## Patentansprüche

1. Bausatz mit kubischen Trägerelementen und Verbindungsmitteln zur Bildung von Raumstrukturen, wobei die Trägerelemente (1) Kuben sind, mit entlang allen Seitenkanten (12) jeder Seiten- (11) und Grundfläche (10) angeordneten Verbindungsmittelaufnahmen (13), **dadurch gekennzeichnet, dass** als Verbindungsmittel (2) zylindrische Distanzstücke (20) mit zentrischen Steckbolzen (23) Verwendung finden, die beidseitig Mittel (21) zur kraft- und formschlüssigen Halterung aufweisen, womit zwei aneinander angrenzende Kuben kraft- oder formschlüssig miteinander verbindbar sind, und dass der Bausatz ferner Paneele (4) umfasst, die an den im montierten Zustand zu den Trägerelementen (1) gerichteten Flächen mit Distanzstücken (20) und/oder mit kraft- und formschlüssigen Halterungen (21) versehen sind, wobei die Distanzstücke (20) oder Halterungen (21) an den Paneelen (4) im gleichen Anordnungsraster wie die Verbindungsmittelaufnahmen (13) der Kuben fest oder lösbar angeordnet sind.

2. Bausatz nach Anspruch 1, **dadurch gekennzeichnet, dass** alle kubischen Trägerelemente (1) eines Bausatzes dieselbe Grundfläche (10) aufweisen.

3. Bausatz nach Anspruch 2, **dadurch gekennzeichnet, dass** der Bausatz kubische Trägerelemente (1) mit unterschiedlichen Höhen (h) umfasst.

4. Bausatz nach Anspruch 1, **dadurch gekennzeichnet, dass** die kubischen Trägerelemente (1) mindestens einseitig offen (11') sind.

5. Bausatz nach Anspruch 1, **dadurch gekennzeichnet, dass** die Grundflächen der kubischen Trägerelemente mit mindestens einer Oeffnung (15) zur Durchführung von Kabeln oder Leitungen versehen sind.

6. Bausatz nach Anspruch 1, **dadurch gekennzeichnet, dass** die Verbindungsmittelaufnahmen (13) Langlöcher sind.

7. Bausatz nach Anspruch 1, **dadurch gekennzeichnet, dass** die zentrischen Steckbolzen (23), mit zwei einander diametral gegenüberliegende, vom Bolzen abstehende Federn (24) versehen zur kraftschlüssigen Verbindung sind und einen den Bolzen (23) diametral durchsetzenden Stift (28) zur formschlüssigen Verbindung aufweisen.

8. Bausatz nach Anspruch 7, **dadurch gekennzeichnet, dass** das Distanzstück Mittel (29) aufweist, um dieses zu fassen und danach zu drehen.

9. Bausatz nach Anspruch 1, **dadurch gekennzeichnet, dass** die Distanzstücke (20) an den Paneelen (4) lösbar befestigt sind.

10. Bausatz nach Anspruch 1, **dadurch gekennzeichnet, dass** Paneele dekorative und/oder funktionale Charakteristiken aufweisen.

## Claims

1. A construction set with cubic carrier elements and connection means for forming three-dimensional structures, wherein the carrier elements (1) are cubes, with connection means receivers (13) arranged along all side edges (10) of each side surface (11) and base surface (10), **characterised in that** as connection means (2) one uses cylindrical distance pieces (20) with cylindrical cotter-pin bolts (23) which on both sides comprise means (21) for non-positive and positive fit mounting, by which means two cubes adjacent to on one another may be connected to one another with a non-positive or positive fit, and that the construction set further comprises panels (4) which at the surfaces which in the assembled condition are directed to the carrier elements (1) are provided with distance pieces (20) and/or with non-positive fit or positive fit mountings (21), wherein the distance pieces (20) or the mountings (21) on the panels (4) are rigidly or releasably arranged in the same arrangement pattern as the connection means receivers (13) of the cubes.

2. A construction set according to claim 1, **characterised in that** all cubic carrier elements (1) of a construction set have the same base surface (10).

3. A construction set according to claim 2, **characterised in that** the construction set comprises cubic carrier elements (1) with different heights (h).

4. A construction set according to claim 1, **characterised in that** the cubic carrier elements (1) are open on at least one side (11')

5. A construction set according to claim 1, **characterised in that** the base surfaces of the cubic carrier elements are provided with at least one opening (15) for leading through cables or leads.

6. A construction set according to claim 1, **characterised in that** the connection means receivers (13) are elongate holes.

7. A construction set according to claim 1, **characterised in that** the centric cotter-pin bolts (23) are provided with two diametrically opposite springs (24) projecting from the bolt for the non-positive fit connection, and comprise a pin (28) passing diametrically through the bolt (23) for the positive-fit connection.

8. A construction set according to claim 7, **characterised in that** the distance piece comprises means (29) in order to grip this and afterwards to rotate this.

9. A construction set according to claim 1, **characterised in that** the distance pieces (20) are releasably fastened on the panels (4).

10. A construction set according to claim 1, **characterised in that** the panels have decorative and/or functional characteristics.

## Revendications

1. Ensemble d'éléments de construction, avec des éléments porteurs cubiques et des moyens d'assemblage, pour la formation de structures tridimensionnelles, les éléments porteurs (1) étant des cubes avec des logements (13) pour moyens d'assemblage disposés le long de toutes les arêtes latérales (12) de chaque face latérale (11) et de base (10), **caractérisé en ce qu'**on utilise comme moyens d'assemblage (2) des écarteurs cylindriques (20) pourvus d'axes débrochables centraux (23), qui présentent de part et d'autre des moyens (21) de fixation à force et par engagement positif, de sorte que deux cubes mutuellement attenants peuvent être assemblés à force ou par engagement positif, et **en ce que** l'ensemble d'éléments de construction comprend en outre des panneaux (4) qui sont pourvus, sur les faces tournées à l'état monté vers les éléments porteurs (1), d'écarteurs (20) et/ou de moyens de fixation (21) à force et par engagement positif, les écarteurs (20) ou les moyens de fixation (21) étant disposés de manière fixe ou amovible sur les panneaux (4) selon la même trame de disposition que les logements (13) pour moyens d'assemblage des cubes.

2. Ensemble d'éléments de construction selon la revendication 1, **caractérisé en ce que** tous les éléments porteurs cubiques (1) d'un ensemble d'éléments de construction présentent la même face de base (10).

3. Ensemble d'éléments de construction selon la revendication 2, **caractérisé en ce que** l'ensemble d'éléments de construction comprend des éléments porteurs cubiques (1) de différentes hauteurs (h).

4. Ensemble d'éléments de construction selon la revendication 1, **caractérisé en ce que** les éléments porteurs cubiques (1) sont ouverts au moins sur un côté (11').

5. Ensemble d'éléments de construction selon la revendication 1, **caractérisé en ce que** les faces de base des éléments porteurs cubiques sont pourvues d'au moins une ouverture (15) pour le passage de câbles ou de lignes.

6. Ensemble d'éléments de construction selon la revendication 1, **caractérisé en ce que** les logements (13) pour moyens d'assemblage sont des trous oblongs.

7. Ensemble d'éléments de construction selon la revendication 1, **caractérisé en ce que** les axes débrochables centraux (23) sont pourvus de deux ressorts (24) diamétralement opposés, partant en saillie à partir de l'axe, pour l'assemblage à force, et présentent une tige (28) traversant diamétralement l'axe (23) pour l'assemblage en engagement positif.

8. Ensemble d'éléments de construction selon la revendication 7, **caractérisé en ce que** l'écarteur présente des moyens (29) pour le saisir puis le faire tourner.

9. Ensemble d'éléments de construction selon la revendication 1, **caractérisé en ce que** les écarteurs (20) sont fixés de manière amovible sur les panneaux (4).

10. Ensemble d'éléments de construction selon la revendication 1, **caractérisé en ce que** des panneaux présentent des caractéristiques décoratives et/ou fonctionnelles.
